# EUROPÄISCHE PATENTANMELDUNG

(11) **EP 3 628 993 A1**
(43) Veröffentlichungstag der Anmeldung: **01.04.2020**
(21) Anmeldenummer: 18197085.6
(22) Anmeldetag: 27.09.2018
(51) Int. Cl.: G01M 3/04, G01M 3/16, G01M 3/18, G01M 3/28, G01M 3/38, G05B 23/02

(54) **VERFAHREN ZUR ERMITTLUNG DES AUFTRETENS EINER STÖRSTELLE EINER LEITUNG MITTELS SCHÄTZUNG**

(71) Anmelder: Siemens Aktiengesellschaft, 80333 München (DE)
(72) Erfinder: Hornacek, Michael, 1100 Wien (AT); Schall, Daniel, 1220 Wien (AT)
(74) Vertreter: Maier, Daniel Oliver

(57) **Zusammenfassung**

Verfahren zur Ermittlung des Auftretens einer Störstelle (11) einer Leitung (10) mittels Schätzung, wobei zumindest ein erster Indikator (40) durch ein, an einem ersten Ort (30) gelegenes erstes Erfassungsmittel (20) ermittelt wird, aus welcher mittels einer ersten Schätzfunktion ein erster Schätzwert bestimmt wird, und zumindest ein zweiter Indikator (41-43) durch zumindest ein, an einem zweiten Ort (31-33) gelegenes, zweites Erfassungsmittel (21-23) ermittelt wird, aus welcher mittels zumindest einer zweiten Schätzfunktion zumindest ein zweiter Schätzwert bestimmt wird, und aus dem ersten Schätzwert und dem zumindest einen zweiten Schätzwert mittels einer Gesamt-Schätzfunktion ein Gesamt-Schätzwert unter Berücksichtigung der jeweiligen Lage des ersten Ortes (30) und des zweiten Ortes (31-33) bestimmt wird, aus welchem das Auftreten der Störstelle (11) abgeschätzt wird.

## Beschreibung

Die Erfindung betrifft ein Verfahren zur Ermittlung des Auftretens einer Störstelle einer Leitung mittels Schätzung, wobei zumindest ein erster Indikator durch ein, an einem ersten Ort gelegenes erstes Erfassungsmittel ermittelt wird, aus welcher mittels einer ersten Schätzfunktion ein erster Schätzwert bestimmt wird, und zumindest ein zweiter Indikator durch zumindest ein, an einem zweiten Ort gelegenes, zweites Erfassungsmittel ermittelt wird, aus welcher mittels zumindest einer zweiten Schätzfunktion zumindest ein zweiter Schätzwert bestimmt wird.

Ferner betrifft die Erfindung eine Vorrichtung zur Ausführung des erfindungsgemäßen Verfahrens.

Leitungen zum Transport von fluiden Medien, wie Flüssigkeiten oder Gasen werden häufig unterirdisch verlegt, beispielsweise um die Leitung vor ungünstigen äußeren Einflüssen zu schützen sowie um ein optisches Erscheinungsbild für Anrainer zu verbessern, insbesondere bei sehr langen Leitungen, wie Pipelines. Jedoch bringt diese Art der Verlegung auch eine Reihe von Problemen mit sich. Häufig treten bei Leitungen unerwünschte Störungen in Form von Leckagen und Überläufen von Wasser, Öl oder Gas auf, wobei es zu umfangreichen Umweltschäden kommen kann, was teilweise nur schwer oder gar nicht behoben werden kann, aber fast immer zu sehr schwierigen und sehr teuren Sanierungsmaßnahmen führt.

Die Veröffentlichung Kishawy, Hossam A., and Hossam A. Gabbar, "Review of pipeline integrity management practices.", International Journal of Pressure Vessels and Piping 87.7 (2010), Seite 373-380, beschreibt verschiedene derzeit eingesetzte Verfahren zur Detektion und Vermeidung von Leckagen. Aus ihr geht hervor, dass die Vorbeugung schon mit der geeigneten Installation der Pipeline beginnt, da bereits kleine Beschädigungen der Leitung wie Beulen die Entstehung von kleinen Rissen begünstigen können. Während des Betriebs der Leitung können im Stand der Technik folgende Systeme zur Erfassung von Leitungsstörungen eingesetzt werden:
1. Supervisory Control and Data Acquisition (SCADA): zur Überwachung des Durchflusses beziehungsweise des Druckes des Mediums in der Leitung, wobei entsprechende Sensoren in Pumpstationen der Leitung angeordnet sind. Unter SCADA versteht man allgemein das Überwachen und Steuern technischer Prozesse mittels eines Computer-Systems.
2. Messleitungen beispielsweise aus Glasfasern, welche als Sensorelement verwendet werden können, um kleinste Erschütterungen zu detektieren und Bewegungen in der Nähe der Leitung zu erfassen.
3. Einfügen von Vorrichtungen in die Leitung (sogenannte "smart pigs") und Durchströmen mit dem Medium, um beispielsweise Korrosionsdaten der Leitung zu erhalten.
4. Abfliegen der Leitung und Bestimmen der Tiefe der Überdeckung ("Depth of Cover") oder von vegetativen Veränderungen über der Leitung, wie auch der Einsatz von speziell trainierten Spürhunden zur Detektion von Leckagen.

Die ersten beiden Varianten stellen kontinuierliche Leckage-Ortungs-Systemen dar, welche eine andauernde Überwachung von Leckagen auf Leitungen erlauben. Hier kann zwischen externen und internen Systemen unterschieden werden. Interne Systeme können beispielsweise Glasfaser-Sensoren, akustische Sensoren, Sensor-Schläuche und Video-Überwachung sein. Externe Systeme können beispielsweise eine Druckpunkt-Analyse oder die Massenbilanz-Methode (Differenz zwischen Massenzufluss und Massenverlust) anwenden, oder auf statistischen Systeme, "Real-Time Transient Model" (RTTM-) oder "Extended Real-Time Transient Model" (E-RTTM) basierten Systemen beruhen.

Die Varianten 3 und 4 sind nicht-kontinuierliche Leckage-Ortungs-Systeme, welche nur bei Bedarf durchgeführt werden und keine permanent andauernde Überwachung von Leckagen zulassen.

Es ist eine Aufgabe der Erfindung die Zuverlässigkeit einer Detektion einer Störstelle gegenüber dem Stand der Technik zu verbessern.

Die Aufgabe wird durch ein Verfahren der eingangs genannten Art gelöst, indem aus dem ersten Schätzwert und dem zumindest einen zweiten Schätzwert mittels einer Gesamt-Schätzfunktion ein Gesamt-Schätzwert unter Berücksichtigung der jeweiligen Lage des ersten Ortes und des zweiten Ortes bestimmt wird, aus welchem das Auftreten der Störstelle abgeschätzt wird.

Dadurch wird erreicht, dass zwei unterschiedliche Indikatoren für jeweils eine Störung zueinander in Relation gebracht werden und durch eine gemeinsame Auswertung mittels des Gesamt-Schätzwerts die Zuverlässigkeit einer Detektion verbessert werden kann. Mit anderen Worten wird mittels eines zweistufigen Verfahrens die Zuverlässigkeit einer Detektion verbessert. Das zweistufige Verfahren umfasst folglich eine erste Stufe und eine zweite Stufe für die Schätzung.

Eine Schätzfunktion zur Bildung eines Schätzwerts, auch Schätzstatistik oder kurz Schätzer dient in der mathematischen Statistik dazu, aufgrund von vorhandenen empirischen Daten einer Stichprobe einen Schätzwert zu ermitteln und dadurch Informationen über unbekannte Parameter einer Grundgesamtheit zu erhalten. Schätzfunktionen sind die Basis zur Berechnung von Punktschätzungen und zur Bestimmung von Konfidenzintervallen mittels Bereichsschätzern und werden als Teststatistiken in Hypothesentests verwendet. Sie sind spezielle Stichprobenfunktionen und können durch Schätzverfahren, beispielsweise die Kleinste-Quadrate-Schätzung, die Maximum-Likelihood-Schätzung oder die Momentenmethode, bestimmt werden.

Die Erfindung wird auch durch eine Vorrichtung der eingangs genannten Art gelöst, wobei die Vorrichtung dazu eingerichtet ist, das erfindungsgemäße Verfahren auszuführen.

Es ist vorteilhaft, wenn die Leitung eine Öl-, Gas- oder Wasser-Leitung ist, da derartige Leitungen im Stand der Technik bereits über eine Reihe von Sensoren zur Überwachung der Leitung eingesetzt werden und daher auf einfache Weise eine Umsetzung der Zusammenführung der kombinierten, zweistufigen Auswertung mehrerer Indikatoren erfolgen kann, insbesondere bei bereits bestehenden Leitungen und dazugehörigen Sensor-Systemen.

Es ist auch vorteilhaft, wenn die Störstelle ein Leck in der Leitung ist. Dadurch können in der Anordnung besonders einfach aufgebaute, sowie bereits bestehende Sensoren von Leitungen genützt werden.

Ferner ist es vorteilhaft, wenn sich die Störstelle außerhalb der Leitung befindet, welche detektiert wird. Mit anderen Worten kann die detektierte Störstelle beispielsweise die Leitung umgebendes Erdreich, Montageelemente oder Verbindungselemente wie Schrauben, welche an der Leitung befestigt sind oder die Leitung mit anderen Teilen verbinden, betreffen. Dadurch können präventiv Störungen erfasst werden, bevor ein Schaden direkt in der Leitung entsteht, beispielsweise durch Unterspülungen der Leitung durch einen temporären Wasserfluss eines schweren Unwetters oder einen Bergrutsch.

In einer Weiterbildung der Erfindung ist aus dem dritten Schätzwert die Position der Störstelle in oder an der Leitung abgeschätzt wird. Der dritte Schätzwert wird aus den vorgelagert bestimmten Schätzwerten bestimmt, in welchen jeweils auch die Position der Störstelle bestimmbar ist. Erst durch eine gemeinsame Beurteilung der einzelnen Schätzwerte der ersten Stufe mit den jeweiligen Positionen der gemeinsamen Störstelle kann die Genauigkeit der Positionsbestimmung der Schätzungen der ersten Stufe insgesamt in der zweiten Stufe des zweistufigen Verfahrens verbessert werden. Es kann sowohl ein Schätzwert der Position der Störstelle in der Leitung, als auch in der angrenzenden Umgebung der Leitung, wie zuvor ausgeführt beispielsweise die Leitung umgebendes Erdreich, bestimmt werden.

In einer Weiterbildung der Erfindung wird der erste Schätzwert mittels der ersten Schätzfunktion und/oder der zumindest eine zweite Schätzwert mittels der zumindest einen zweiten Schätzfunktion durch eine Analysevorrichtung bestimmt. Durch die Berechnung der jeweiligen Schätzwerte in der Analysevorrichtung können die jeweiligen Erfassungsvorrichtungen und deren Entwicklung vereinfacht werden.

In einer Weiterbildung der Erfindung liegt der erste Ort des ersten Erfassungsmittels und der zweite Ort des zumindest einen zweiten Erfassungsmittels benachbart zueinander und zur Leitung, vorzugsweise innerhalb einer Distanz von 40 m, mehr bevorzugt innerhalb von 24 m und besonders bevorzugt innerhalb von 10 m. Durch eine entsprechende Positionierung der jeweiligen Erfassungsmittel kann erreicht werden, dass die Bestimmung der Position von Störstellen genauer ist.

In einer Weiterbildung der Erfindung sind das erste Erfassungsmittel und/oder das zumindest eine zweite Erfassungsmittel durch die Durchführung einer visuellen Inspektion der Leitung gebildet. Dadurch wird erreicht, dass beispielsweise die Art und Qualität der Vegetation über einer vergrabenen Leitung auf einfache Weise analysierbar ist, insbesondere wenn die visuelle Inspektion luftgestützt beispielsweise mit einer Drohne oder einem Hubschrauber erfolgt. Dabei erfolgt die visuelle Inspektion bevorzugt mit Hilfe eines bildgebenden Sensors im optischen und/oder im Infrarot-Bereich.

In einer Weiterbildung der Erfindung sind das erste Erfassungsmittel und/oder das zumindest eine zweite Erfassungsmittel durch die Durchführung einer Bodenanalyse der Umgebung der Leitung gebildet. Dadurch wird erreicht, dass beispielsweise die Kontamination des Bodens durch das Medium, welches in der Leitung geführt wird, über, neben oder unter einer vergrabenen Leitung auf einfache Weise analysierbar ist, insbesondere durch einen Feuchtigkeitssensor.

In einer Weiterbildung der Erfindung ist das erste Erfassungsmittel durch eine Analysevorrichtung von Wetterdaten gebildet. Wetterdaten können Prognose-Daten, aktuelle beziehungsweise bereits erfolgte Wettereinflüsse sein. Diese Daten können entweder manuell bestimmt sein, oder durch Wetter-Simulationen eines computergestützten Wetterdienstes ermittelt sein. Dabei werden lokale Wetterdaten an einem bestimmten Ort ermittelt, wie beispielsweise Hagel, Fluten, Sturm oder Hitzepunkte.

In einer Weiterbildung der Erfindung ist das erste Erfassungsmittel durch eine Analysevorrichtung von Umweltdaten gebildet. Die Umweltdaten können Analysedaten sein, die aus satellitengestützten bildgebenden Sensoren stammen oder davon abgeleitet sind, beispielsweise Karten von Gewässern, abgebrannten Gebieten, Überschwemmungen oder Bodensenkungen.

Umweltdaten können Daten von satellitengestützten Datendiensten wie Copernicus (http://www.copernicus.eu/main/services) sein, und beispielsweise Daten zur Atmosphäre, zum Klimawandel, zur Meeresumwelt oder Landdaten enthalten.

In einer Weiterbildung der Erfindung repräsentiert der erste Indikator und der zumindest eine zweite Indikator voneinander unabhängige physikalische Messgrößen, vorzugsweise Druck, Bewegung und Temperatur. Eine Erfassung einer Bewegung kann beispielsweise durch Bewegungssensoren oder Beschleunigungssensoren erfolgen.

In einer Weiterbildung der Erfindung repräsentiert der erste Indikator und der zumindest eine zweite Indikator eine Änderung von physikalischen Eigenschaften der Leitung, vorzugsweise Materialeigenschaften oder Eigenschaften über die Alterung von Material. Die entsprechenden Eigenschaften beziehungsweise deren Änderungen können in einem Modell oder einer Datenbank hinterlegt sein.

In einer Weiterbildung der Erfindung ist die dritte Schätzfunktion eine Bayes-Schätzfunktion. Dadurch kann auf eine einfache Weise eine verbesserte zwei-stufige Schätzung realisiert werden, sowie durch Anwendung eines Bayes-Netzwerks kann die Leitung und deren Indikatoren besonders übersichtlich modelliert werden.

Ein Bayes-Schätzer ist in der mathematischen Statistik eine Schätzfunktion, die zusätzlich zu den beobachteten Daten eventuell vorhandenes Vorwissen über einen zu schätzenden Parameter berücksichtigt. Gemäß der Vorgehensweise der bayesschen Statistik wird dieses Vorwissen durch eine Verteilung für den Parameter modelliert, die A-priori-Verteilung. Mit dem Satz von Bayes ergibt sich die bedingte Verteilung des Parameters unter den Beobachtungsdaten, die A-posteriori-Verteilung. Um daraus einen eindeutigen Schätzwert zu erhalten, werden Lagemaße der A-posteriori-Verteilung, wie Erwartungswert, Modus oder Median, als sogenannte Bayes-Schätzer verwendet. Da der A-posteriori-Erwartungswert der wichtigste und in der Praxis am häufigsten angewendete Schätzer ist, bezeichnen auch einige Autoren diesen als den Bayes-Schätzer.

Allgemein definiert man einen Bayes-Schätzer als denjenigen Wert, der den Erwartungswert einer Verlustfunktion unter der A-posteriori-Verteilung minimiert. Für eine quadratische Verlustfunktion ergibt sich dann gerade der A-posteriori-Erwartungswert als Schätzer.

Die Erfindung wird nachfolgend anhand eines in den beigeschlossenen Zeichnungen dargestellten Ausführungsbeispiels näher erläutert. In den Zeichnungen zeigt:
- Fig. 1: eine schematische Darstellung einer Vorrichtung zur erfindungsgemäßen Schätzung des Auftretens einer Störstelle auf einer Leitung,
- Fig. 2: eine schematische Darstellung eines Bayes-Netzwerks zur Verwendung in einem erfindungsgemäßen Verfahren.

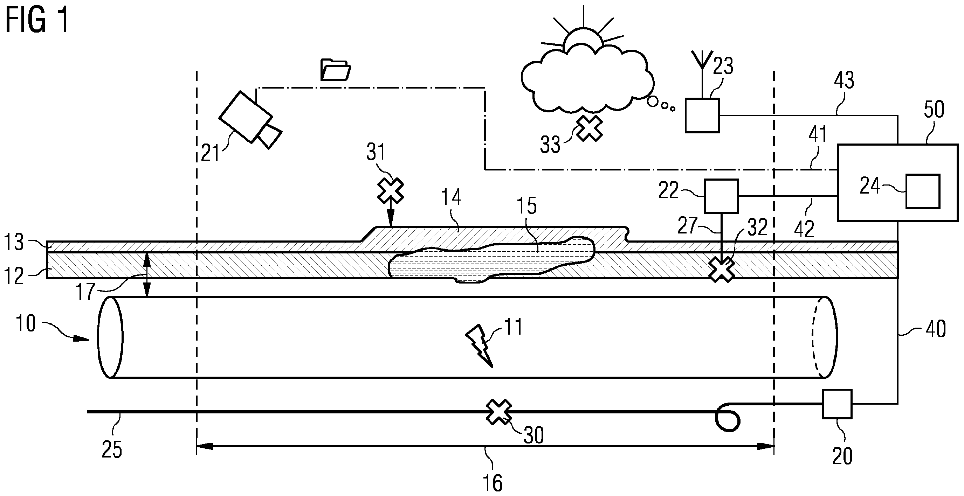

Fig. 1 zeigt schematisch ein Ausführungsbeispiel einer Anordnung mit einer Leitung 10, welche zum Ferntransport von Öl vorgesehen ist. Die Figur zeigt die Anordnung zur erfindungsgemäßen Schätzung des Auftretens einer Störstelle 11, beispielsweise einer Leckage durch einen Riss in der Leitung 10, wobei die Leitung 10 im Boden 12 eingebracht und mit Erdreich überdeckt ist und ferner eine Vegetation 13, beispielsweise eine Wiese, den Boden 12 bedeckt.

Die Vorrichtung umfasst ein erstes Erfassungsmittel 20 in Form eines Leitungssensors mit einer Messleitung 25, welche benachbart zur Leitung 10 verläuft. Mittels der Messleitung 25 kann eine Störstelle 11 beispielsweise durch eine Erfassung einer Änderung des Widerstandes der Messleitung 25 im Erdreich ermittelt werden, sowie der Ort der Widerstandsänderung als ein erster Ort 30.

Die Erfassung der Widerstandsänderung kann als erster Indikator 40 durch das erste Erfassungsmittel 20 beispielsweise durch eine Messung von Reflexionen eines in die Messleitung 25 eingespeisten Hochfrequenzsignals, welche durch die Einwirkung der Leckage an der Störstelle 11 der Leitung 10 auf den ersten Ort 30 entstehen, erfolgen.

Das erste Erfassungsmittel 20 ist zur Übertragung des ersten Indikators 40 und des ersten Orts 30 mit einer Analysevorrichtung 50 drahtgebunden oder drahtlos verbunden.

Die Analysevorrichtung 50 ist dazu eingerichtet, aus dem ersten Indikator 40 mittels einer ersten Schätzfunktion einen ersten Schätzwert zu bestimmen. Alternativ kann der erste Schätzwert auch von dem ersten Erfassungsmittel 20 bestimmt werden und der erste Schätzwert an die Analysevorrichtung 50 zur weiteren Verwendung übertragen werden.

Ferner umfasst die Vorrichtung ein zweites Erfassungsmittel 21 in Form einer Kamera, welche dazu eingerichtet ist, eine visuelle Inspektion der Leitung 10 durchzuführen. Die Kamera ist ein bildgebender Sensor, welcher beispielsweise im optischen und im Infrarot-Bereich sensitiv ist. Die Kamera kann beispielsweise mit einer Drohne oder einem Hubschrauber entlang der Leitung 10 bewegt werden und die Vegetation 13 beziehungsweise die Umgebung unmittelbar über der Leitung 10 erfassen. Änderungen der Vegetation 14 an einem zweiten Ort 31 können in Form von Kameraaufnahmen mit Positionsdaten aus einem GPS-System kombiniert, als zweiter Indikator 41 erfasst und an die Analysevorrichtung 50 übertragen werden.

Die Analysevorrichtung 50 ist dazu eingerichtet, aus dem zweiten Indikator 41 mittels einer zweiten Schätzfunktion einen zweiten Schätzwert zu bestimmen.

In diesem Ausführungsbeispiel umfasst die Vorrichtung außerdem ein drittes Erfassungsmittel 22 mit einem Bodenfeuchtesensor 27, welcher dazu eingerichtet ist, die relative Feuchtigkeit des Bodens an einem dritten Ort 32 als dritten Indikator 42 zu erfassen. Mit anderen Worten kann eine Bodenanalyse der Umgebung der Leitung 10 durch den Feuchtigkeitssensor 27 erfolgen.

Das dritte Erfassungsmittel 22 ist zur Übertragung des dritten Indikators 42 und des dritten Orts 32 mit einer Analysevorrichtung 50 drahtgebunden oder drahtlos verbunden.

Die Analysevorrichtung 50 ist dazu eingerichtet, aus dem dritten Indikator 42 mittels einer dritten Schätzfunktion einen dritten Schätzwert zu bestimmen.

Die Vorrichtung umfasst auch ein viertes Erfassungsmittel 23 in Form eines computergestützten Wetterdienstes, welcher dazu eingerichtet ist, lokale Wetterdaten an einem vierten Ort 33 zu prognostizieren oder aktuelle beziehungsweise bereits erfolgte Wettereinflüsse zu bestimmen und als vierten Indikator 43 an die Analysevorrichtung 50 zu übertragen. Die lokalen Wettereinflüsse können beispielsweise Hagel, Fluten, Sturm oder Hitzepunkte sein.

Die Analysevorrichtung 50 ist dazu eingerichtet, aus dem vierten Indikator 43 mittels einer vierten Schätzfunktion einen vierten Schätzwert zu bestimmen.

Die Vorrichtung umfasst in diesem Beispiel ein fünftes Erfassungsmittel 24 in Form einer Datenbank, in welcher Eigenschaften über die Alterung von physikalischen MaterialEigenschaften von Abschnitten der Leitung 10 einen fünften Indikator bilden. In der Datenbank ist zusätzlich ein fünfter Ort für die Position des entsprechenden Abschnitts der Leitung 10 hinterlegt.

Die Analysevorrichtung 50 bildet ein SCADA-System und ist dazu eingerichtet, aus dem fünften Indikator mittels einer fünften Schätzfunktion einen fünften Schätzwert zu bestimmen.

Es ist klar, dass die Orte 30-33 der jeweiligen Erfassungsmittel 20-24 vorbekannt und statisch sein können. Für diese Fälle können die Positionen der jeweiligen Orte 30-33 in der Analysevorrichtung 50 in einem Speicher hinterlegt sein und den jeweiligen Erfassungsmitteln 20-24 zur weiteren Verwendung zugeordnet werden, wobei die Erfassungsmittel dann nur die jeweiligen Indikatoren 40-43 an die Analysevorrichtung 50 übermitteln.

Die Analysevorrichtung 50 ist ferner dazu eingerichtet, aus dem ersten Schätzwert, dem zweiten Schätzwert, dem dritten Schätzwert, dem vierten Schätzwert und dem fünften Schätzwert mittels einer Gesamt-Schätzfunktion, beispielsweise mit Hilfe eines Bayes-Schätzers, einen Gesamt-Schätzwert unter Berücksichtigung der jeweiligen Lage des ersten Ortes 30, des zweiten Ortes 31, des dritten Ortes 32, des vierten Ortes 33 und des fünften Ortes zu bestimmen, aus welchem Gesamt-Schätzwert das Auftreten der Störstelle 11 beziehungsweise deren Position abschätzbar ist.

Durch die erfindungsgemäße zweistufige Schätzung gelingt es, voneinander unabhängige Indikatoren miteinander zu kombinieren und eine präzise Schätzung von Störstellen zu ermöglichen, wobei die Indikatoren unabhängige physikalische Messgrößen sein können, wie beispielsweise Druck, Bewegung und Temperatur. Folglich können die Erfassungsmittel 20-23 ein Drucksensor, ein Beschleunigungssensor, ein Temperatursensor oder ähnliches sein, wobei klar ist, dass zusätzlich eine entsprechende Sensorauswertungselektronik vorgesehen sein muss, um die Sensorwerte als entsprechende Indikatoren zu erfassen.

Das erfindungsgemäße Verfahren kann genauer sein, wenn die Orte 30-33 der jeweiligen Erfassungsmittel 20-24 benachbart zueinander und zur Leitung 10 gelegen sind, vorzugsweise innerhalb einer Distanz 16 von 40 m, mehr bevorzugt innerhalb von 24 m und besonders bevorzugt innerhalb von 10 m.

Die Distanz 16 ist bevorzugt der Durchmesser eines gedachten Kreises, in welchem sowohl die Position der Leckage, als auch der Orte 30-33 der jeweiligen Erfassungsmittel 20-24 liegen.

Ein Überdeckungsgrad 17 ist durch die Tiefe der Leitung unter der bedeckenden Erdoberfläche, das heißt die vertikale Distanz von der Oberseite der Pipeline bis zur Oberfläche des Erdbodens.

Ferner eignet sich das erfindungsgemäße Verfahren, um Störstellen 11 auch außerhalb der Leitung 10 zu detektieren, wie beispielsweise Unterspülungen der Leitung 10 durch ein fließendes Gewässer.

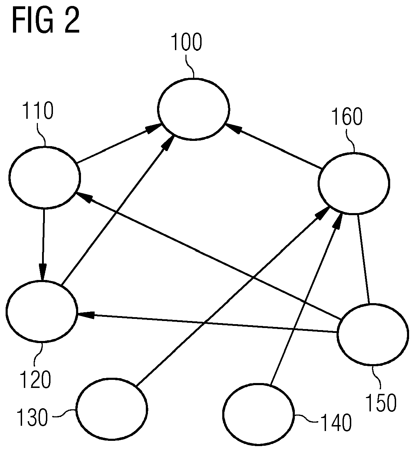

Fig. 2 zeigt ein Ausführungsbeispiel zur Beschreibung einer Modellierung des erfindungsgemäßen Verfahrens anhand eines Bayes-Netzwerks.

Das Konzept der Erfindung sieht vor, an sich heterogene Informationen durch ein einheitliches Modell zu verbinden. Dies kann dazu genutzt werden, einen Betreiber einer Öl-Pipeline in seinen Schlussfolgerungen und Entscheidungen zu unterstützen.

Bayes-Netzwerke sehen eine formale Grundlage für die Integration von Informationen und Inferenzen von Ereignissen vor. Ein Bayes-Netzwerk ist ein grafisches Modell, welches als gerichteter azyklischer Graph beschrieben werden kann, wobei Knoten diskrete Zufallsvariablen und gerichtete Pfeile Abhängigkeiten zwischen Variablen im Sinn von bedingten Wahrscheinlichkeiten repräsentieren.

Durch ein Bayes-Netzwerk kann es auf einfache Weise ermöglicht werden, Expertenwissen und empirische Daten in Modellen mit Bayes-Netzwerken zu verteilen. Bayes-Netzwerke sind außerdem robust gegen fehlerbehaftete, fehlende und gestreute Daten. Ferner erlauben Bayes-Netzwerke eine semantische Interpretation aus den eigenen Daten heraus, wodurch eine vertrauenswürdige und sichere Beziehung zu den verwendeten Daten abgeleitet werden kann.

Das Modell der Fig. 2 kann Anfragen hinsichtlich der "Gesundheit" beziehungsweise des Dichtheitszustandes eines Abschnitts einer Pipeline beantworten, welcher durch den Knoten HEALTH 100 beschrieben werden kann.

Ein Abschnitt kann sehr flexibel festgelegt werden, beispielsweise als der Abstand zwischen zwei Pumpstationen, um eine hinreichende Eingrenzung von Informationen und Alarmen zu erreichen. Allgemein kann der Dichtheitszustand eines Abschnitts einer Pipeline ein Ergebnis einer Analyse von SCADA-Ereignissen, Erdbeobachtungsdaten und Ereignissen, welche durch externe Tätigkeiten ausgelöst werden, beispielsweise eine nahegelegene Baustelle, sein.

Im Zusammenhang mit Öl, Gas und Wasser kann ein SCADA-System mit einem Status-Knoten 110 Durchfluss- und Druckwerte einer Leitung überwachen und entsprechende Alarme bei Überschreitung eines festgelegten Grenzwerts auslösen. Das SCADA-System kann in ähnlicher Form die Analysevorrichtung 50 sein und die Erfassungsmittel 20-24 der Fig. 1 umfassen. Leck-Ortungs-Systeme auf statistischer Basis unterziehen vorher bestimmten Werten für die Indikatoren 40-43 jeweils einem statistischen Test. Dabei können allgemeine statistische Variablen aus einer Druckänderung über die Zeit oder nach der Massenbilanz-Methode gebildet werden. Der sogenannte Hypothesen-Test ist dabei ein häufig verwendetes Verfahren.

Falls Leck-Ortungs-Systeme auf statistischer Basis, welche eine Auswertung eines SCADA-Systems durchführen, ein Leck mit hoher Sicherheitswahrscheinlichkeit bestimmen, ist die Wahrscheinlichkeit eines nachlassenden Dichtheitszustands eines Pipeline-Abschnitts oft sehr hoch, insbesondere für schleichende oder sich erst entwickelnde Leckagen. Somit hat der SCADA-Knoten 110 im Modell der Fig. 2 einen direkten Bezug zum HEALTH-Knoten 100.

Durch Erdbeobachtungsdaten kann der Vegetationszustand des die Pipeline überdeckenden Bodens erfasst werden. Dabei kann der sogenannte "Normalized Difference Vegetation Index" (NDVI) angewandt werden, welcher beispielsweise durch luftgestützte visuelle Beobachtung mittels einer Kamera erfasset werden kann. Dabei können einzelnen Kamerabilder jeweilig aktuelle Positionsdaten der Kamera aus einem GPS-System zugeordnet werden, um nachfolgend eine automatisierte Auswertung zu ermöglichen und eine georeferenzierte elektronische Karte des NDVI zu erstellen. Der NDVI ist ein einfacher und verbreitet angewandter Vegetations-Gesundheits-Indikator. Ein geografisch eingegrenzter Bereich mit einem NVDI-Raster kann mittels einer Kombination aus Luftbildern von optischen und nahen Infrarot-Bändern (NIR) berechnet werden. Auf der Basis zweier überdeckender Lagen von NDVI-Karten, welche aus unterschiedlichen Beobachtungen stammen, kann beispielsweise Pixel-weise eine Karte mit NDVI-Änderungen berechnet werden, welche in Polygone hinsichtlich Bereiche minimaler und maximaler Änderung unterteilt werden kann. Diesen Polygonen können zahlreiche Attribute zugewiesen werden, wie beispielsweise die Fläche in Quadratmetern, welche wiederum zur Filterung genutzt werden können.

Während ein NDVI-Wert beziehungsweise eine Änderung des NDVI im Bayes-Modell der Fig. 2 ein Absterben der Vegetation erfassen kann, welche möglicherweise durch eine Leckage der Leitung verursacht ist, könnte ein einzelner NDVI-Wert beziehungsweise eine Änderung des NVDI zu unerwünschten Fehlalarmen ("false positives") führen, wodurch der alleinige NDVI-Wert für eine Leck-Ortung eher ungeeignet ist. Daher ist in Fig. 2 ein NDVI-Knoten 120 mit dem SCADA-Knoten 110 verbunden, sowie mit einem ASSET-Knoten 150.

Ein SCADA-Alarm würde ein Problem, welches durch eine NDVI-Änderung detektiert wurde, verstärken und weitere Informationen zum detektierten Leck liefern. Ferner würde der ASSET-Knoten 150 ebenfalls das Problem verstärken, indem Informationen hinsichtlich des Korrosionszustandes der Beschichtung der Pipeline ergänzt werden, wie nachfolgend weiter ausgeführt.

Der Grad der Überdeckung, der sogenannte "Depth of Cover" (DOC) oder Schichtdicke, ist die vertikale Distanz von der Oberseite der Pipeline bis zur Oberfläche des Erdbodens und ist im Modell der Fig. 2 durch den Knoten 130 berücksichtigt. Pipelines müssen zum Zeitpunkt ihrer Errichtung minimale gesetzliche Vorgaben erfüllen, welche auch die notwendige Überdeckung regeln können. Jedoch kann sich diese Überdeckung beispielsweise durch Grabungsarbeiten, Erosion, Kultivierung, Bautätigkeiten, Überschwemmungen, Bodenabsenkungen oder andere Umwelteinflüsse oder Einflüsse des Menschen im Lauf der Zeit ändern.

Durch ein Pipeline-Referenzmodell und ein Gelände-Modell, welches beispielsweise durch Luftaufnahmen ermittelt wurde, kann DOC in Metern bezüglich des Geländes-Modells bestimmt werden. Für einen bestimmten Punkt ist DOC die Differenz zwischen dem Gelände-Modell und dem Pipeline-Referenzmodell an diesem Punkt, wie aus der WO 2017/174426 A1 bekannt.

Ein weiterer Knoten 140 kann das Wetter (WEATHER) sein. Wetterdaten können Prognose-Daten, aktuelle beziehungsweise bereits erfolgte Wettereinflüsse sein. Diese Daten können entweder manuell bestimmt sein, oder durch Wetter-Simulationen eines computergestützten Wetterdienstes ermittelt sein. Dabei werden lokale Wetterdaten an einem bestimmten Ort ermittelt, wie beispielsweise Hagel, Fluten, Sturm oder Hitzepunkte.

Der ASSET-Knoten 150 beinhaltet alle Informationen hinsichtlich der physischen Leitung, wie beispielsweise Informationen in Form eines georeferenzierten Pipeline-Referenzmodells, über die Materialeigenschaften der Leitung sowie potentielle Korrosionsparameter der Pipeline oder Abschnitten davon. Die Korrosionsparameter können beispielsweise mittels verschiedener Messtechniken innerhalb der Leitung erfasst werden, sowie durch Zuverlässigkeits- und Überlebenszeit-Modelle und - Analysen.

Der Knoten 150 verbindet die Knoten 110 (SCADA) sowie Knoten 120 (NDVI). Somit kann ein Alarm aus dem SCADA-System durch Daten aus dem ASSET-Knoten (150) durch eine entsprechend hohe Auftretenswahrscheinlichkeit beispielsweise einer altersbedingten Korrosion an einer bestimmten Stelle zusätzlich gestützt werden.

Ein weiterer Knoten 160 kann Vorgänge (EVENTS) berücksichtigen, wie beispielsweise Grabungsarbeiten, Kultivierung, Bautätigkeiten, Überschwemmungen oder Erdbeben. Die Vorgänge können beispielsweise durch Einsatz von Glasfaser-Sensoren erfasst und klassifiziert werden. Vorgänge haben meist einen großen Einfluss auf die "Gesundheit" der Pipeline, welche im Knoten 100 abgebildet ist, sofern der DOC-Knoten 130 ebenso als kritisch angesehen wird. Ein Betreiber muss eine Auswertung durchführen, um festzustellen, ob Behebungsmaßnahmen unter den gegebenen Umständen angemessen sind.

Die Knoten 130 und 140 sind vorzugsweise mit dem Knoten 160 (EVENTS) verbunden.

Nachdem das Bayes-Modell trainiert ist und entsprechende Daten durch ein Sensor-Netzwerk beispielsweise in Form eines Internet-of-Things (IoT), hinterlegt sind, kann eine automatisch und andauernde Auswertung der "Gesundheit" der Pipeline erfolgen, was als Inferenz bezeichnet wird.

Beispielsweise kann der Knoten 100 (HEALTH) folgende Werte umfassen: OK, DETORIATED (verschlechtert),
SEVERE_DAMAGE (schwerer Schaden).

Eine Abfrage an das SCADA-System, beispielsweise die Analysevorrichtung 50 der Fig. 1, könnte dann lauten:
cpquery(pipeline_health_bn, event=(HEALTH=="SEVERE_DAMAGE"), evidence=(SCADA=="ALARM_PRESSURE_LOSS" & NDVI_CHANGE=="LARGE"))
wobei folgende Parameter gemäß Fig. 1 und 2 beispielhaft die Abfrage definieren:
"pipeline_health_bn" ist ein Bayes-Netzwerkmodell der Pipeline 10 mit dem Gesundheits-Status des HEALTH-Knotens 100.
"event" definiert für einen spezifischen Gesundheits-Status des HEALTH-Knotens 100, welcher durch die Bedingung eines "evidence"-Parameters festgelegt ist. Der evidence-Parameter kann eine Verknüpfung mehrerer Zustände verschiedener Knoten sein, wie beispielsweise des Zustands "ALARM_PRESSURE_LOSS" des SCADA-Knotens 110 und des Zustands "LARGE" des NVDI-Knotens 120.

Das Ergebnis wäre für diesen Fall, dass der Pipeline-Gesundheitszustand SEVERE_DAMAGE ist, gestützt durch eine Meldung aus dem SCADA-System, welches einen Alarm eines Drucksensors des SCADA-Systems über einen Druckverlust ausgegeben hat, sowie die Vegetation im relevanten Bereich eine große Änderung des NDVI-Parameters aufweist, welcher mittels Luftaufnahmen und einer anschließenden computergestützten Auswertung ermittelt wurde.

### Bezugszeichenliste:

- 10: Leitung
- 11: Störstelle, Leck
- 12: Boden
- 13, 14: Vegetation, Wiese
- 15: Austritt bzw. Ansammlung des Mediums
- 16: Distanz
- 17: Überdeckungsgrad
- 20-24: Erfassungsmittel
- 25: Messleitung
- 27: Feuchtigkeitssensor
- 30-33: Ort des Erfassungsmittels
- 40-43: Indikator
- 50: Auswertungsvorrichtung
- 100: Zustand der Leitung, HEALTH
- 110: SCADA-System
- 120: Vegetationszustand, Normalized Difference Vegetation Index, NDVI
- 130: Überdeckungszustand, Depth of Cover, DOC
- 140: Wetter, WEATHER
- 150: physikalischer Zustand, Eigenschaften der Leitung, ASSET
- 160: Vorgänge, EVENTS

## Patentansprüche

1. Verfahren zur Ermittlung des Auftretens einer Störstelle (11) einer Leitung (10) mittels Schätzung,
wobei zumindest ein erster Indikator (40) durch ein, an einem ersten Ort (30) gelegenes erstes Erfassungsmittel (20) ermittelt wird, aus welcher mittels einer ersten Schätzfunktion ein erster Schätzwert bestimmt wird,
und zumindest ein zweiter Indikator (41-43) durch zumindest ein, an einem zweiten Ort (31-33) gelegenes, zweites Erfassungsmittel (21-23) ermittelt wird, aus welcher mittels zumindest einer zweiten Schätzfunktion zumindest ein zweiter Schätzwert bestimmt wird,
**dadurch gekennzeichnet, dass** aus dem ersten Schätzwert und dem zumindest einen zweiten Schätzwert mittels einer Gesamt-Schätzfunktion ein Gesamt-Schätzwert unter Berücksichtigung der jeweiligen Lage des ersten Ortes (30) und des zweiten Ortes (31-33) bestimmt wird, aus welchem das Auftreten der Störstelle (11) abgeschätzt wird.

2. Verfahren nach dem vorhergehenden Anspruch, wobei die Leitung (10) eine Öl-, Gas- oder Wasser-Leitung ist.

3. Verfahren nach einem der vorhergehenden Ansprüche, wobei die Störstelle (11) ein Leck in der Leitung (10) ist.

4. Verfahren nach einem der vorhergehenden Ansprüche, wobei sich die Störstelle (11) außerhalb der Leitung (10) befindet.

5. Verfahren nach einem der vorhergehenden Ansprüche, wobei aus dem dritten Schätzwert die Position der Störstelle (11) in oder an der Leitung (10) abgeschätzt wird.

6. Verfahren nach einem der vorhergehenden Ansprüche, wobei der erste Schätzwert mittels der ersten Schätzfunktion und/oder der zumindest eine zweite Schätzwert mittels der zumindest einen zweiten Schätzfunktion durch eine umfasst Analysevorrichtung (50) bestimmt wird.

7. Verfahren nach einem der vorhergehenden Ansprüche, wobei der erste Ort (30) des ersten Erfassungsmittels (20) und der zweite Ort (31-33) des zumindest einen zweiten Erfassungsmittels (21-23) benachbart zueinander und zur Leitung (10) liegen, vorzugsweise innerhalb einer Distanz (16) von 40 m, mehr bevorzugt innerhalb von 24 m und besonders bevorzugt innerhalb von 10 m.

8. Verfahren nach einem der vorhergehenden Ansprüche, wobei das erste Erfassungsmittel (20) und/oder das zumindest eine zweite Erfassungsmittel (21-23) durch die Durchführung einer visuellen Inspektion der Leitung (10) gebildet sind, vorzugsweise mit Hilfe eines bildgebenden Sensors (21) im optischen und/oder im Infrarot-Bereich.

9. Verfahren nach einem der vorhergehenden Ansprüche, wobei das erste Erfassungsmittel (20) und/oder das zumindest eine zweite Erfassungsmittel (21-23) durch die Durchführung einer Bodenanalyse der Umgebung der Leitung (10) gebildet sind, vorzugsweise durch einen Feuchtigkeitssensor (22).

10. Verfahren nach einem der vorhergehenden Ansprüche, wobei das erste Erfassungsmittel (20) durch eine Analysevorrichtung (23) von Wetterdaten oder Umweltdaten gebildet ist.

11. Verfahren nach einem der vorhergehenden Ansprüche, wobei der erste Indikator (40) und der zumindest eine zweite Indikator (41-43) voneinander unabhängige physikalische Messgrößen repräsentieren, vorzugsweise Druck, Bewegung und Temperatur.

12. Verfahren nach einem der vorhergehenden Ansprüche, wobei der erste Indikator (40) und der zumindest eine zweite Indikator (41-43) eine Änderung von physikalischen Eigenschaften der Leitung (10) repräsentieren, vorzugsweise Materialeigenschaften oder Eigenschaften über die Alterung von Material.

13. Verfahren nach einem der vorhergehenden Ansprüche, wobei die dritte Schätzfunktion eine Bayes-Schätzfunktion ist.

14. Vorrichtung zur Schätzung des Auftretens einer Störstelle (11) einer Leitung (10), **dadurch gekennzeichnet, dass** die Vorrichtung dazu eingerichtet ist, das Verfahren nach einem der vorhergehenden Ansprüche auszuführen.
